# EUROPÄISCHE PATENTSCHRIFT

(11) **EP 2 510 250 B1**
(45) Veröffentlichungstag und Bekanntmachung des Hinweises auf die Patenterteilung: **05.03.2014**
(21) Anmeldenummer: 10787369.7
(22) Anmeldetag: 29.11.2010
(51) Int. Cl.: F16D 11/14

(54) **FORMSCHLÜSSIGE SCHALTEINRICHTUNG, INSBESONDERE KLAUENSCHALTEINRICHTUNG**
POSITIVE SHIFTING DEVICE, IN PARTICULAR A GUIDED MANUAL TRANSMISSION
DISPOSITIF DE COMMUTATION À COMPLÉMENTARITÉ DE FORMES, EN PARTICULIER DISPOSITIF DE COMMUTATION À GRIFFES

(30) Priorität: 10.12.2009 DE 102009054459
(43) Veröffentlichungstag der Anmeldung: 17.10.2012
(73) Patentinhaber: ZF Friedrichshafen AG, 88038 Friedrichshafen (DE)
(72) Erfinder: ROSEMEIER, Thomas, 88074 Meckenbeuren (DE)
(86) Internationale Anmeldenummer: PCT/EP2010/068394
(87) Internationale Veröffentlichungsnummer: WO 2011/069853

(56) Entgegenhaltungen:
- EP-A2- 0 149 387
- DE-A1- 19 711 971
- DE-A1-102004 003 287
- FR-A- 1 177 826
- FR-A1- 2 887 604
- GB-A- 2 237 349
- JP-A- 58 152 936
- US-A- 2 536 897
- US-A- 5 044 481
- US-A- 6 065 898

## Beschreibung

Die vorliegende Erfindung betrifft eine formschlüssige Schalteinrichtung, insbesondere Klauenschalteinrichtung für ein Fahrzeuggetriebe gemäß der im Oberbegriff des Patentanspruches 1 näher definierten Art.

Formschlüssige Schalteinrichtungen, wie zum Beispiel Klauenschalteinrichtungen oder dergleichen, sind aus der Fahrzeugtechnik bekannt. Bei den Klauenschalteinrichtungen wird beim Schalten ein Einspurvorgang zum formschlüssigen Verbinden der korrespondierenden Klauen ausgelöst. Der Einspurvorgang kann jedoch erst beginnen, wenn ein vorgegebener Differenzgeschwindigkeitsbereich erreicht ist. Es hat sich gezeigt, dass es dabei zu so genannten Zahn-auf-Zahnstellungen bei den korrespondierenden Klauen kommen kann, sodass die einzuspurenden Klauen aufeinander treffen, wodurch der Einspurvorgang unterbrochen werden muss, bis die Zahn-auf-Zahnstellung überwunden ist. Somit ist es erforderlich, dass die aufgebrachte Schaltenergie zwischengespeichert wird. Dies führt zu unnötig aufwändig gestalteten Betätigungen und zu einer nicht reproduzierbaren Dynamik bei den Schaltungen.

Dokument FR 1 177 826 offenbart eine Klauenschalteinrichtung nach dem Oberbegriff des Anspruchs 1.

Der vorliegenden Erfindung liegt die Aufgabe zu Grunde, eine formschlüssige Schalteinrichtung der eingangs beschriebenen Gattung vorzuschlagen, bei der während eines Einspurvorganges eine Zahn-auf-Zahnstellung möglichst vermieden wird.

Diese Aufgabe wird erfindungsgemäß durch die Merkmale des Patentanspruches 1 gelöst. Weitere vorteilhafte Ausgestaltungen ergeben sich insbesondere aus den Unteransprüchen und den Zeichnungen.

Demzufolge wird eine formschlüssige Schalteinrichtung, insbesondere Klauenschalteinrichtung für zum Beispiel ein Fahrzeuggetriebe mit zumindest einem ersten Kupplungselement beziehungsweise Klauenschaltelement und einem zweiten axial bewegbaren Kupplungselement vorgeschlagen, wobei zum formschlüssigen Einspuren der Klauen das axial bewegbare Kupplungselement beziehungsweise die Schaltmuffe schaltbar ist, wenn die Differenzgeschwindigkeit zwischen den beiden Kupplungselementen einen vorbestimmten Wert erreicht hat, wobei zumindest eine Erfassungseinrichtung zum Erfassen einer beim Einspuren notwendigen Differenzposition zwischen den korrespondierenden Klauen der beiden Kupplungselemente zum Vermeiden einer Zahn-auf-Zahnstellung bei den Klauen vorgesehen ist. Auf diese Weise wird eine positions- und geschwindigkeitsgeführte Klauenschalteinrichtung realisiert.

In vorteilhafter Weise wird bei der vorgeschlagenen Klauenschalteinrichtung eine unerwünschte Zahn-auf-Zahnstellung dadurch vermieden, dass das Ausführen des Einspurvorganges in Abhängigkeit der Differenzposition zwischen den korrespondierenden Klauen und in Abhängigkeit der Differenzgeschwindigkeit durchgeführt wird. Dies bedeutet, dass mit dem Einspurvorgang nur begonnen wird, wenn die Differenzposition, also keine Zahn-auf-Zahnstellung, bei den Klauen vorliegt und wenn die erforderliche Differenzgeschwindigkeit zwischen den beiden Kupplungselementen anliegt.

Als Erfassungseinrichtung ist ein optischer Sensor oder dergleichen mit einer Lichtquelle zum Erfassen von Differenzpositionen zwischen den Klauen vorgesehen. Die Lichtquelle wird derart angeordnet, dass ein zumindest abschnittsweise in Einspurrichtung verlaufender Lichtstrahl im Bereich der Klauen ausgegeben wird, wobei die vorderen Klauen bezogen auf die Lichtstrahlrichtung zum Beispiel lichtabsorbierend und die hinteren Klauen reflektierend ausgebildet sind. Wenn zum Beispiel die Breite des ausgegebenen Lichtstrahles der Breite einer Klaue zuzüglich der Breite einer Lücke zwischen zwei benachbarten Klauen entspricht, kann anhand des reflektierten Lichtstrahles durch den Sensor erkannt werden, wann die korrespondierenden Klauen gegeneinander verschoben sind, um den Einspurvorgang auslösen zu können. Dazu wird zum Beispiel der reflektierte Lichtstrahl durch den optischen Sensor aufsummiert. Beispielsweise kann der Verlauf des Lichtstrahles durch mindest einen Spiegel oder dergleichen beliebig variiert werden.

Die Differenzgeschwindigkeit kann anhand der erfassten Relativpositionen der Klauen abgeleitet werden. Damit ist es mit der Erfassungseinrichtung möglich, sowohl die Differenzposition als auch die Differenzgeschwindigkeit zu ermitteln, so dass diese zu einem geeigneten Zeitpunkt dann die Betätigung zum Beispiel elektromagnetisch oder dergleichen auslösen kann, so dass die Klauen mit der richtigen Differenzgeschwindigkeit und der richtigen Relativposition beim Einspuren aufeinander treffen. Weiterhin kann auch die genaue axiale Position des axial bewegbaren Kupplungselements beziehungsweise der Schaltmuffe nach der Auslösung des Einspurvorganges erfasst und Abweichungen vom Sollwertverlauf korrigiert werden. Dies entweder durch die Betätigung selber, zum Beispiel bei elektromotorischer Betätigung mit einer Lage- beziehungsweise Geschwindigkeitsregelung oder auch alternativ durch eine regelbare Bremse oder einen Elektromotor an einer der beteiligten Wellen der Kupplungselemente.

Im Rahmen einer weiteren vorteilhaften Ausgestaltung der vorliegenden Erfindung kann vorgesehen sein, dass durch eine entsprechende geometrische Gestaltung zumindest der Klauenkontaktgeometrien das Einspurverhalten weiter verbessert wird. Vorzugsweise kann die Klauensgeometrie dabei zum Beispiel derart abgerundet sein, dass die Form etwa die ballistische Bahn bei einem gelungenen Einspurenvorgang widerspiegelt. Dadurch treten nur geringe Stöße bei einer eventuellen Abweichung von der optimalen Einspurbahn auf.

Nachfolgend wird die vorliegende Erfindung anhand der Zeichnungen weiter erläutert. Es zeigen:
Figur 1 eine schematische Draufsicht auf eine Klauenschalteinrichtung mit Hall-Sensoren als Erfassungseinrichtung;
Figur 2 eine schematische Draufsicht auf eine alternativ ausgestaltete Klauenschalteinrichtung gemäß Figur 1;
Figur 3 eine schematische Ansicht der erfindungsgemäßen Klauenschalteinrichtung mit einem optischen Sensor als Erfassungseinrichtung;
Figur 4 eine weitere schematische Ansicht der erfindungsgemäßen Klauenschalteinrichtung gemäß Figur 3; und
Figur 5 eine schematische Ansicht einer veränderten Klauengeometrie bei einer Klauenschalteinrichtung.

In den Figuren sind verschiedene Ausführungsvarianten einer Klauenschalteinrichtung beispielhaft angedeutet. Die Klauenschalteinrichtung für ein Fahrzeuggetriebe umfasst ein erstes drehbares Klauenschaltelement beziehungsweise Kupplungselement 1 und ein zweites drehbares und axial bewegbares Klauenschaltelement beziehungsweise Kupplungselement 2, die jeweils über den Umfang verteilt mehrere Klauen 3, 4 oder dergleichen zum formschlüssigen Einspuren aufweisen. Die Kupplungselemente 1, 2 sind üblicherweise jeweils einer Welle zugeordnet, wobei im geschalteten Zustand die jeweiligen, nicht weiter dargestellten Wellen über die Kupplungselemente 1, 2 miteinander in Verbindung gebracht werden.

Erfindungsgemäß ist nun vorgesehen, dass zumindest eine Erfassungseinrichtung zum Erfassen einer beim Einspuren notwendigen Differenzposition zwischen den korrespondierenden Klauen 3, 4 der beiden Kupplungselemente 1, 2 vorgesehen ist, um eine Zahn-auf-Zahnstellung auszuschließen. Auf diese Weise wird der Einspurvorgang bei korrekter Differenzposition und bei korrekter Differenzgeschwindigkeit zwischen den beiden Kupplungselementen 1, 2 ausgelöst.

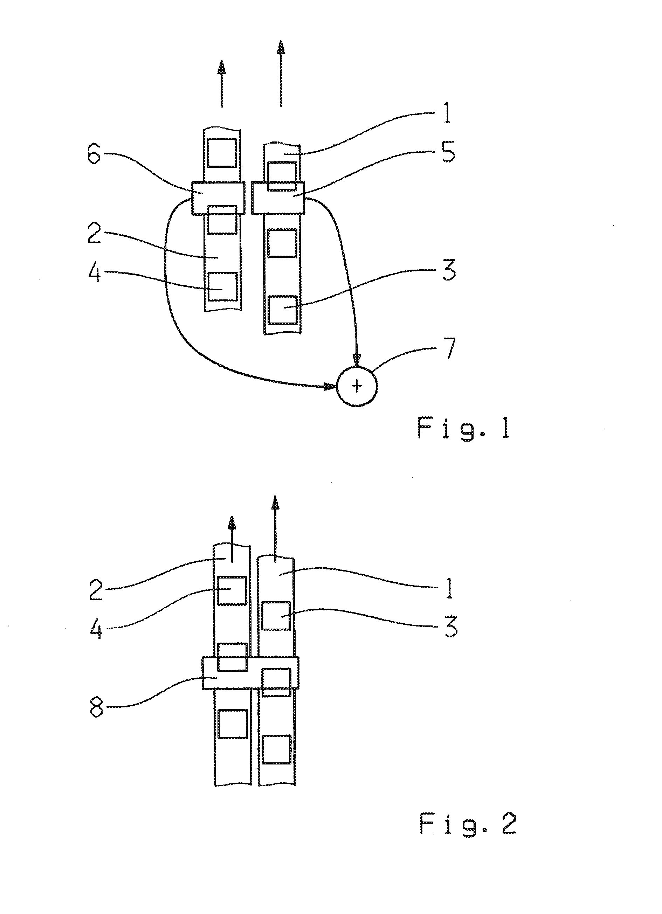

In Figur 1 sind als Erfassungseinrichtung zwei Hall-Sensoren 5, 6 vorgesehen, wobei jeder Hall-Sensor 5, 6 den Klauen 3, 4 eines der beiden Kupplungselemente 1, 2 zugeordnet ist. Die Signale der Hall-Sensoren werden in einer den beiden Sensoren 5, 6 zugeordneten Auswerteeinheit 7 aufsummiert, wobei der jeweilige Wechselstromanteil der Signale ein Maß für die Überdeckung der korrespondierenden Klauen 3, 4 ist. Dies bedeutet, je kleiner der Wechselstromanteil ist, desto mehr sind die korrespondierenden Klauen 3, 4 gegeneinander verschoben. Die Differenzgeschwindigkeit zwischen den Kupplungselementen 1, 2 kann aus der Relativpositionen bestimmt werden, wobei die Drehbewegung der Kupplungselemente mittels Pfeilen in Figur 1 angedeutet ist.

Gemäß Figur 2 ist eine alternative Ausführung dargestellt, bei der im Unterschied zur vorgeschriebenen Ausführung ein gemeinsamer Hall-Sensor 8 vorgesehen ist, der gleichzeitig den Klauen 3, 4 beider Kupplungselemente 1, 2 zugeordnet ist.

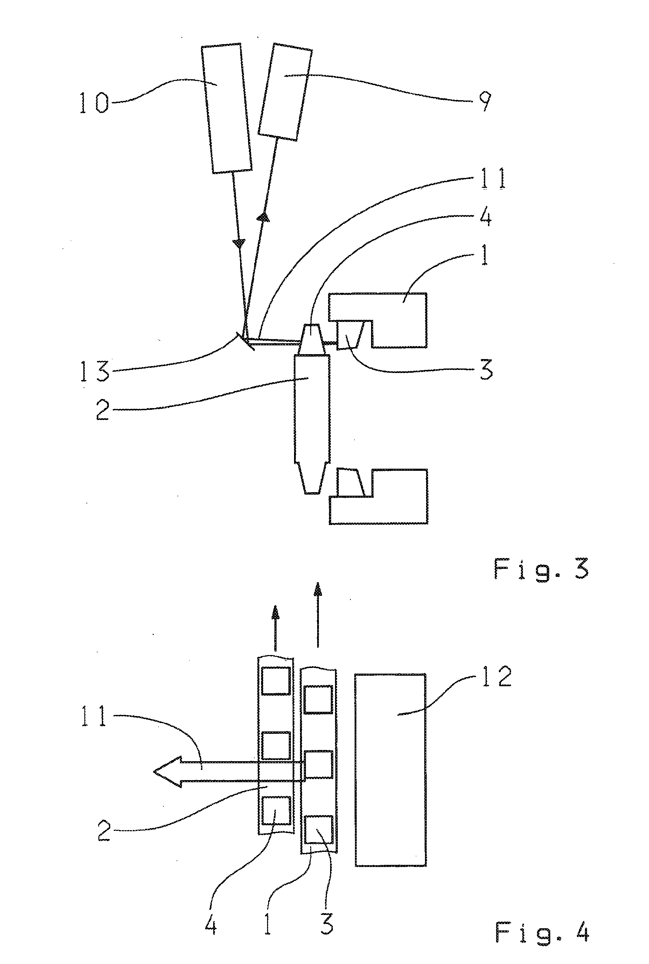

In den Figuren 3 und 4 ist eine Ausführung der Erfindung gezeigt, bei der als Erfassungseinrichtung ein optischer Sensor 9 mit einer Lichtquelle 10 verwendet wird. Die Lichtquelle 10 ist derart angeordnet, dass ein zumindest abschnittsweise in Einspurrichtung verlaufender Lichtstrahl 11 im Bereich der Klauen 3, 4 ausgegeben wird, wobei die vorderen Klauen 4 der Schaltmuffe beziehungsweise des zweiten Kupplungselements 2 lichtabsorbierend beziehungsweise matt und die hinteren Klauen 3 des ersten Kupplungselements 1 reflektierend ausgebildet sind. Vorzugsweise ist ein möglicher Hintergrund 12 ebenfalls lichtabsorbierend ausgebildet. Wenn die Breite des Lichtstrahles 11 in etwa der Breite einer Klaue 3, 4 zuzüglich der Breite einer Lücke entspricht, kann der optische Sensor 9 anhand des aufsummierten, reflektierten Lichtstrahles 11 erkennen, wann eine Differenzposition zwischen den Klauen 3, 4 der beiden Kupplungselemente 1, 2 vorliegt. Der Verlauf des Lichtstahles 11 wird durch einen Spiegel 13 entsprechend verändert. Die Differenzgeschwindigkeit zwischen den Kupplungselementen 1, 2 kann aus der Relativposition abgeleitet werden.

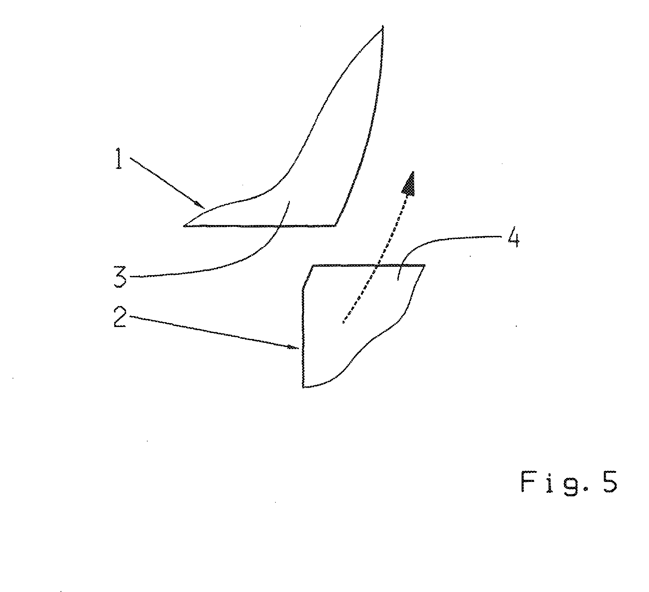

Figur 5 zeigt eine geometrische Gestaltung der Klauen-Kontaktgeometrie, um das Einspurverhalten zu verbessern. Dazu sind zumindest die Kontaktflächen der Klauen 3, 4 entsprechend abgerundet, so dass die Klauengeometrie etwa die ballistische Bahn der Relativbewegung des zweiten Kupplungselements 2 bzw. der Schaltmuffe bei einem gelungenen Einspuren widerspiegelt, wobei die Relativbewegung des zweiten axial bewegbaren Kupplungselementes 2 während des Einspurvorganges mit einem Pfeil in Figur 5 angedeutet ist. Durch die gewählte Klauengeometrie treten nur geringe oder keine Stöße bei einer Abweichung von der Sollbahn beim Einspuren an den Kupplungselementen 1, 2 auf.

### Bezugszeichen

- 1: erstes Kupplungselement
- 2: zweites Kupplungselement
- 3: Klauen des ersten Kupplungselementes
- 4: Klauen des zweiten Kupplungselementes
- 5: Hall-Sensor
- 6: Hall-Sensor
- 7: Auswerteeinheit
- 8: Hall-Sensor
- 9: optischer Sensor
- 10: Lichtquelle
- 11: Lichtstrahl
- 12: Hintergrund
- 13: Spiegel

## Patentansprüche

1. Klauenschalteinrichtung für ein Fahrzeuggetriebe mit zumindest einem ersten drehbaren Kupplungselement (1) und einem zweiten drehbaren und axial bewegbaren Kupplungselement (2), wobei zum formschlüssigen Einspuren der korrespondierenden Klauen (3,4) der beiden Kupplungselemente (1,2) das axial bewegbare Kupplungselement (2) schaltbar ist, sobald eine vorbestimmte Differenzgeschwindigkeit zwischen den beiden Kupplungselementen (1,2) erreicht ist, wobei zumindest eine Erfassungseinrichtung zum Erfassen einer beim Einspuren notwendigen Differenzposition zwischen den korrespondierenden Klauen (3,4) der beiden Kupplungselemente (1,2) vorgesehen ist, wobei als Erfassungseinrichtung ein optischer Sensor (9) mit einer Lichtquelle (10) vorgesehen ist, **dadurch gekennzeichnet, dass** die Lichtquelle (10) derart angeordnet ist, dass ein zumindest abschnittsweise in Einspurrichtung verlaufender Lichtstrahl (11) im Bereich der Klauen (3, 4) ausgebbar ist, wobei die vorderen Klauen (4) des zweiten Kupplungselements (2) lichtabsorbierend und die hinteren Klauen (3) des ersten Kupplungselements (1) reflektierend ausgebildet sind.

2. Schalteinrichtung nach Anspruch 1, **dadurch gekennzeichnet, dass** als Erfassungseinrichtung zumindest ein Hall-Sensor (5, 6, 8) vorgesehen ist, wobei der Wechselstromanteil der ausgegebenen Signale als Maß für eine Überdeckung der Klauen (3, 4) dient.

3. Schalteinrichtung nach einem der Ansprüche 1 bis 2, **dadurch gekennzeichnet, dass** die Breite des ausgegebenen Lichtstrahles (11) der Breite einer Klaue (3, 4) zuzüglich der Breite einer Lücke zwischen zwei benachbarten Klauen (3, 4) eines Kupplungselements (1, 2) entspricht.

4. Schalteinrichtung nach Anspruch 1 oder 3, **dadurch gekennzeichnet, dass** der reflektierte Lichtstrahl (11) durch den optischen Sensor (9) aufsummierbar ist.

5. Schalteinrichtung nach einem der Ansprüche1, 3 oder 4, **dadurch gekennzeichnet, dass** der Verlauf des Lichtstrahles (11) über zumindest einen Spiegel (13) veränderbar ist.

6. Schalteinrichtung nach einem der vorangehenden Ansprüche, **dadurch gekennzeichnet, dass** mittels der Erfassungseinrichtung die Differenzgeschwindigkeit aus den erfassten Relativpositionen der Klauen (3, 4) ermittelbar ist.

7. Schalteinrichtung nach einem der vorangehenden Ansprüche, **dadurch gekennzeichnet, dass** zumindest teilweise die korrespondierenden Kontaktflächen der Klauen (3, 4) derart abgerundet sind, dass die abgerundete Form dem Verlauf der Relativbewegung des zweiten Kupplungselements (2) während des Einspurens nachgebildet.

## Claims

1. Constant-mesh shift device for a vehicle transmission having at least a first rotatable clutch element (1) and a second rotatable and axially moveable clutch element (2), wherein the axially movable clutch element (2) can be shifted in order to mesh the corresponding dogs (3, 4) of the two clutch elements (1, 2) in a positively engaging fashion as soon as a predetermined differential speed between the two clutch elements (1, 2) is reached, wherein at least one sensing device is provided for sensing a differential position, necessary during the meshing, between the corresponding dogs (3, 4) of the two clutch elements (1, 2), wherein an optical sensor (9) with a light source (10) is provided as the sensing device, **characterized in that** the light source (10) is arranged in such a way that a light beam (11) which runs in the meshing direction at least in certain sections can be output in the region of the dogs (3, 4), wherein the front dogs (4) of the second clutch element (2) are embodied in a light-absorbing fashion, and the rear dogs (3) of the first clutch element (1) are embodied in a reflective fashion.

2. Shift device according to Claim 1, **characterized in that** at least one Hall sensor (5, 6, 8) is provided as the sensing device, wherein the alternating current component of the signals which are output serves as a measure of overlapping of the dogs (3, 4).

3. Shift device according to one of Claims 1 to 2, **characterized in that** the width of the light beam (11) which is output corresponds to the width of a dog (3, 4) plus the width of a gap between two adjacent dogs (3, 4) of a clutch element (1, 2).

4. Shift device according to Claim 1 or 3, **characterized in that** the reflected light beam (11) can be summed by the optical sensor (9).

5. Shift device according to one of Claims 1, 3 or 4, **characterized in that** the profile of the light beam (11) can be modified by means of at least one mirror (13).

6. Shift device according to one of the preceding claims, **characterized in that** the differential speed can be determined from the sensed relative positions of the dogs (3, 4) by means of the sensing device.

7. Shift device according to one of the preceding claims, **characterized in that** the corresponding contact faces of the dogs (3, 4) are at least partially rounded in such a way that the rounded shape replicates the profile of the relative movement of the second clutch element (2) during the meshing.

## Revendications

1. Dispositif de commutation à griffes pour une boîte de vitesses de véhicule comprenant au moins un premier élément d'accouplement (1) rotatif et un deuxième élément d'accouplement (2) rotatif et mobile dans le sens axial, dispositif avec lequel, pour l'engagement à complémentarité de formes des griffes (3, 4) correspondantes des deux éléments d'accouplement (1, 2), l'élément d'accouplement mobile dans le sens axial (2) peut être commuté dès qu'une vitesse différentielle prédéfinie est atteinte entre les deux éléments d'accouplement (1, 2), au moins un dispositif de captage étant prévu pour capter une position différentielle nécessaire lors de l'engagement entre les griffes correspondantes (3, 4) des deux éléments d'accouplement (1, 2), un capteur optique (9) comprenant une source de lumière (10) étant prévu comme dispositif de captage, **caractérisé en ce que** la source de lumière (10) est disposée de telle sorte qu'un rayon lumineux (11) qui se propage au moins dans certaines portions dans le sens de l'engagement peut être délivré dans la zone des griffes (3, 4), les griffes avant (4) du deuxième élément d'accouplement (2) étant configurées pour absorber la lumière et les griffes arrière (3) du premier élément d'accouplement (1) pour réfléchir la lumière.

2. Dispositif de commutation selon la revendication 1, **caractérisé en ce qu'**au moins un capteur à effet Hall (5, 6, 8) est prévu comme dispositif de captage, la composante de courant alternatif des signaux délivrés servant de mesure pour un chevauchement des griffes (3, 4).

3. Dispositif de commutation selon l'une des revendications 1 à 2, **caractérisé en ce que** la largeur du rayon lumineux (11) délivré correspond à la largeur d'une griffe (3, 4) plus la largeur d'un espace entre deux griffes (3, 4) voisines d'un élément d'accouplement (1, 2).

4. Dispositif de commutation selon la revendication 1 ou 3, **caractérisé en ce que** le rayon lumineux (11) réfléchi peut être totalisé par le capteur optique (9).

5. Dispositif de commutation selon l'une des revendications 1, 3 ou 4, **caractérisé en ce que** le tracé du rayon lumineux (11) peut être modifié par le biais d'au moins un miroir (13).

6. Dispositif de commutation selon l'une des revendications précédentes, **caractérisé en ce que** la vitesse différentielle peut être déterminée à l'aide du dispositif de captage à partir des positions relatives captées des griffes (3, 4).

7. Dispositif de commutation selon l'une des revendications précédentes, **caractérisé en ce que** les surfaces de contact correspondantes des griffes (3, 4) sont au moins partiellement arrondies de telle sorte que la forme arrondie simule le tracé du mouvement relatif du deuxième élément d'accouplement (2) pendant l'engagement.
